# FASCICULE DE BREVET EUROPEEN

(11) **EP 1 117 170 B1**
(45) Date de publication et mention de la délivrance du brevet: **15.10.2003**
(21) Numéro de dépôt: 01400058.2
(22) Date de dépôt: 10.01.2001
(51) Int. Cl.: H02K 7/08

(54) **Motoréducteur destiné à des équipements fonctionnels de véhicules automobiles**
Getriebemotor für Funktionselemente von Fahrzeugen
Geared motor drive for functionnal vehicle equipment

(30) Priorité: 11.01.2000 FR 0000292
(43) Date de publication de la demande: 18.07.2001
(73) Titulaire: ArvinMeritor Light Vehicle Systems-France, 45600 Sully sur Loire (FR)
(72) Inventeur: Laurandel, Hervé, 14200 Herouville Saint Clair (FR)
(74) Mandataire: Moncheny, Michel

(56) Documents cités:
- EP-A- 0 509 263
- DE-U- 8 903 714
- FR-A- 2 196 540

## Description

La présente invention a pour objet un motoréducteur destiné à des équipements fonctionnels de véhicules automobiles, tels que lève-vitre, toits ouvrants ou sièges.

Un tel motoréducteur comprend un stator logé dans un boîtier, un rotor pourvu d'un arbre d'induit portant un collecteur et traversant un palier de roulement logé dans un support d'un carter réducteur. L'arbre d'induit est disposé dans ce dernier et comprend une vis sans fin coopérant avec une roue dentée logée dans le carter réducteur, cet engrenage étant convenablement lubrifié par de la graisse ou de l'huile. Fréquemment le motoréducteur est disposé avec son arbre d'induit et son rotor disposés de manière sensiblement verticale.

ll a été constaté qu'après une certaine durée d'utilisation de ce motoréducteur, il se produit une usure prématurée des balais glissant sur le collecteur en raison de la présence de lubrifiant sur celui-ci, consécutivement à des fuites du lubrifiant de l'engrenage intérieur au carter réducteur.

En effet, compte tenu de la disposition verticale du motoréducteur, le collecteur et les balais se trouvent placés au-dessous du carter réducteur, de sa vis sans fin et de la roue dentée. En outre la haute température de fonctionnement du motoréducteur favorise la fuite d'huile ou de graisse a l'extérieur du carter réducteur, entre celui-ci et le palier de roulement.

L'invention a pour but de proposer un motoréducteur dans lequel toute fuite de lubrifiant depuis l'intérieur du carter réducteur est éliminée, favorisant ainsi une plus grande longévité des balais du collecteur. Cet objectif est atteint par un motoréducteur selon la revendication 1.

Conformément à l'invention, un joint d'étanchéité est interposé entre le palier et le support de palier, du côté du palier proche de l'intérieur du carter réducteur.

Ce joint d'étanchéité peut être torique ou équivalent, de dureté appropriée au rotulage de l'arbre (autoalignement de l'arbre avec le palier de fond du stator).

Dans ces conditions toute fuite intempestive de lubrifiant depuis l'intérieur du carter réducteur est supprimée.

D'autres particularités et avantages de l'invention apparaîtront au cours de la description qui va suivre, faite en référence au dessin annexé qui en illustre une forme de réalisation à titre d'exemple limitatif.

La figure 1 est une vue en coupe longitudinale partielle sensiblement à l'échelle, d'un motoréducteur selon l'état de l'art antérieur à l'invention.

La figure 2 est une vue en coupe longitudinale partielle à échelle agrandie par rapport à la figure 1 d'une forme de réalisation du motoréducteur selon l'invention.

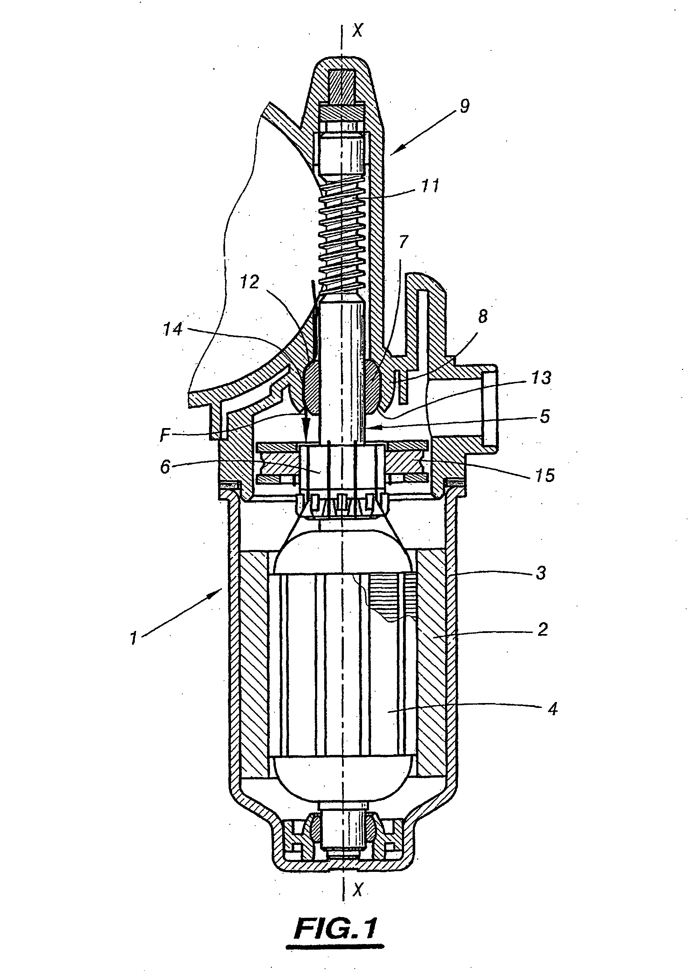

Le motoréducteur 1 illustré à la figure 1 est destiné à des équipements fonctionnels de véhicules automobiles tels que des lève-vitre ou des toits ouvrants.

Il comprend un stator 2 logé dans un boîtier 3, un rotor 4 placé à l'intérieur du stator 2, pourvu d'un arbre d'induit 5 portant un collecteur 6 et traversant un palier 7 de roulement logé dans un support 8 d'un carter réducteur 9 dans lequel est disposé l'arbre 5. Le collecteur 6 coopère avec des balais 15. L'arbre 5 comporte, intérieurement au carter 9, une vis sans fin 11 1 coopérant avec une roue dentée non représentée également logée dans le carter réducteur 9.

Ce dernier contient un lubrifiant (graisse, huile) pour l'engrenage constitué par la vis sans fin 11 et la roue dentée. L'arbre d'induit 5 et le rotor 4 ont un axe longitudinal XX orienté verticalement lorsque le motoréducteur est ainsi disposé, dans des lève-vitre de véhicules ou autres équipements fonctionnels.

Le palier de roulement 7 présente à ses extrémités opposées des surfaces sphériques 12, 13 raccordées par une surface cylindrique centrale 14, ces différentes surfaces prenant appui sur des portées de profils complémentaires du support 8 de palier. On constate qu'avec un tel agencement il se produit une usure prématurée des balais 15 par suite d'une fuite de lubrifiant depuis l'intérieur du carter réducteur 9 entre le palier 7 et le support 8, cette fuite étant symbolisée par la flèche F à la figure 1.

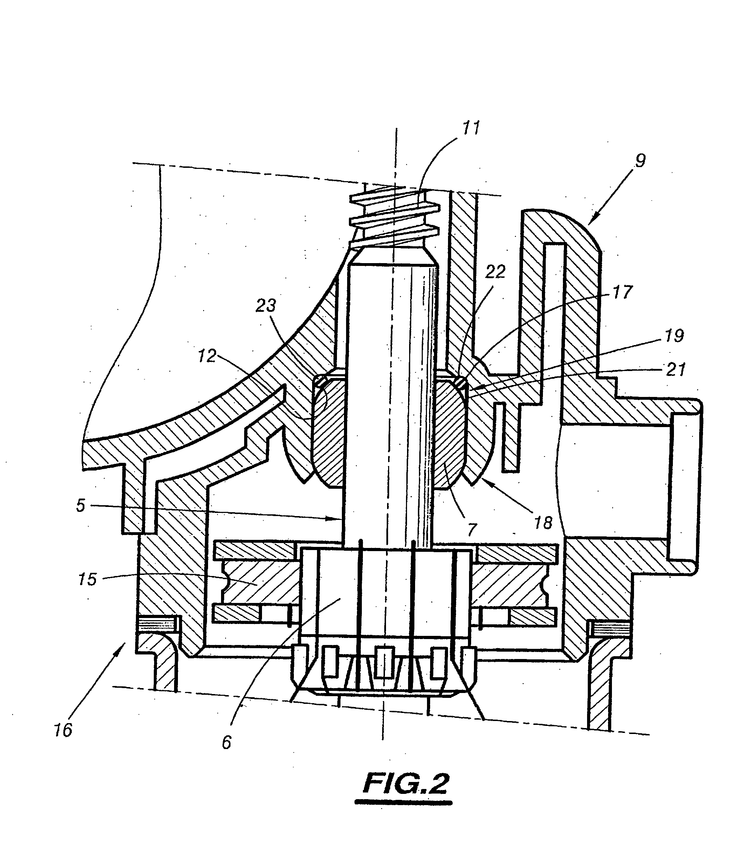

Dans le motoréducteur 16 selon l'invention, illustré à la figure 2, un joint d'étanchéité 17 est interposé entre le palier de roulement 7 et le support 18 de roulement, et ce du côté du palier 7 proche de l'intérieur du carter 9.

Dans la paroi du support de palier 18 est agencé un logement annulaire 19 dont le profil est adapté pour recevoir de manière étanche le joint 17, lequel est placé en appui sur la surface sphérique 12 correspondante du palier 7. Le joint 17 peut être torique comme représenté, ou de profil différent, par exemple à lèvre. La paroi du logement 19 présente deux surfaces 21, 22 sensiblement perpendiculaires et raccordées par une portée centrale arrondie 23 d'appui du joint 17. De préférence la portée 23 constituant le fond du logement 19 a un profil sphérique complémentaire de celui du joint 17.

Ce dernier présente une dureté Shore A appropriée au rotulage de l'arbre d'induit 5, c'est à dire de préférence de 30 à 50.

On constate que dans ces conditions, malgré la disposition verticale du motoréducteur 16 et l'échauffement du lubrifiant à haute température, aucune fuite ne se produit plus depuis l'intérieur du carter réducteur 9 vers le collecteur 6. En effet la combinaison du joint 17 et du profil de son logement 19 s'oppose efficacement à toute fuite de lubrifiant entre le palier 7 et le support 18. Il en résulte un allongement de la longévité des balais 15, dont l'usure est notablement réduite.

Le joint 17 et le logement 19 peuvent être remplacés par un joint et un logement de profils différents, complémentaires l'un de l'autre.

## Revendications

1. Motoréducteur (16) destiné à des équipements fonctionnels de véhicules automobiles tels que lèvre-vitre, toits ouvrants ou sièges, comprenant un rotor (4) pourvu d'un arbre d'induit (5) portant un collecteur (6) et traversant un palier de roulement (7) logé dans un support (18) d'un carter réducteur (9) dans lequel est disposé ledit arbre, une vis sans fin (11) de l'arbre coopérant avec une roue dentée logée dans le carter réducteur, le palier (7) étant situé axialement entre ledit collecteur (6) et ladite vis sans fin (11), et un joint d'étanchéité (17) interposé entre le palier ét le support de palier, du côté du palier tourné vers la vis sans fin (11), ledit j oint (17) étant disposé en appui sur une surface sphérique (12) du palier (7) de roulement, **caractérisé en ce que** le joint (17) est en contact uniquement avec le support (18) et la surface sphérique (12) du palier (7).

2. Motoréducteur selon la revendication 1, **caractérisé en ce que** dans la paroi du support (18) de palier est agencé un logement annulaire (19) dont le profil est adapté pour recevoir de manière étanche le joint (17).

3. Motoréducteur selon la revendication 2, **caractérisé en ce que** le joint d'étanchéité (17) est torique et la paroi du logement (19) présente deux surfaces sensiblement perpendiculaires (21, 22) raccordées par une portée centrale arrondie (23) d'appui du joint.

## Patentansprüche

1. Getriebemotor (16) für die funktionale Ausstattungen von Kraftfahrzeugen, wie zum Beispiel Fensterheber, Schiebedächer oder Sitze, der einen Rotor (4) umfasst, der mit einer Ankerwelle (5) versehen ist, die einen Kollektor (6) trägt und ein Kugellager (7) durchquert, das in einem Träger (18) eines Getriebegehäuses (9) untergebracht ist, in dem die Welle angeordnet ist, eine Schnecke (11) der Welle, die mit einem Zahnrad zusammenarbeitet, das im Getriebegehäuse untergebracht ist, wobei das Lager (7) axial zwischen dem Kollektor (6) und der Schnecke (11) liegt, und eine Dichtung (17), die zwischen dem Lager und dem Lagerträger auf der Lagerseite eingefügt ist, die zur Schnecke (11) gekehrt ist, wobei die Dichtung (17) auf einer kugelförmigen Oberfläche (12) des Lagers (7) aufliegend angeordnet ist, **dadurch gekennzeichnet, dass** die Dichtung (17) nur mit dem Träger (18) und der kugelförmigen Oberfläche (12) des Lagers (7) in Kontakt ist.

2. Getriebemotor nach Anspruch 1, **dadurch gekennzeichnet, dass** in der Wand des Lagerträgers (18) eine ringförmige Aufnahme (19) eingerichtet ist, deren Profil angepasst ist, um die Dichtung (17) dicht aufzunehmen.

3. Getriebemotor nach Anspruch 2, **dadurch gekennzeichnet, dass** die Dichtung (17) ein O-Ring ist und die Wand der Aufnahme (19) zwei in etwa senkrechte Flächen (21, 22) aufweist, die durch eine zentral abgerundete Auflagefläche (23) zur Auflage der Dichtung miteinander verbunden sind.

## Claims

1. Geared motor drive (16) intended for functional vehicle equipment such as screen wipers, opening roofs or seats, comprising a rotor (4) provided with an armature shaft (5) carrying a collector (6) and going through a bearing (7) housed in a support (18) of a reduction unit casing (9) in which the said shaft is arranged, a worm (11) of the shaft working in conjunction with a toothed wheel in the reduction unit casing, the bearing (7) being located axially between the said collector (6) and the said worm (11), and a seal (17) inserted between the bearing and the bearing support, on the side of the bearing turned towards the worm (11), the said seal (17) being arranged supported on a spherical surface (12) of the bearing (7), **characterised in that** the seal (17) is in contact only with the support (18) and the spherical surface (12) of the bearing (7).

2. Geared motor drive according to Claim 1, **characterised in that** in the wall of the bearing support (18) there is an annular housing (19), the profile of which is suited to take the seal (17) sealed.

3. Geared motor drive according to Claim 2, **characterised in that** the seal (17) is in the form of an O-ring and the wall of the housing (19) has two more or less perpendicular surfaces (21, 22) connected by a central rounded bearing face (23) supporting the seal.
